(19) **Europäisches Patentamt European Patent Office Office européen des brevets**

(11) **EP 4 607 623 A1**

(12) **EUROPEAN PATENT APPLICATION**
published in accordance with Art. 153(4) EPC

(43) Date of publication:
**27.08.2025 Bulletin 2025/35**

(21) Application number: **24760516.5**

(22) Date of filing: **08.02.2024**

(51) International Patent Classification (IPC):
$H01M\ 4/62$ (2006.01)    $H01M\ 4/38$ (2006.01)
$H01M\ 4/48$ (2010.01)    $H01M\ 4/587$ (2010.01)
$H01M\ 4/134$ (2010.01)    $H01M\ 4/36$ (2006.01)
$H01M\ 4/583$ (2010.01)    $H01M\ 4/02$ (2006.01)

(52) Cooperative Patent Classification (CPC):
Y02E 60/10

(86) International application number:
**PCT/KR2024/001946**

(87) International publication number:
**WO 2024/177326 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.02.2023 KR 20230022832**

(71) Applicant: SK On Co., Ltd.
**Seoul 03161 (KR)**

(72) Inventors:
 • LIM, Jong-Hwi
  **Daejeon 34124 (KR)**
 • KO, Byoung-Ho
  **Daejeon 34124 (KR)**
 • LEE, Joon-Yeob
  **Daejeon 34124 (KR)**

(74) Representative: **Stolmár & Partner Patentanwälte PartG mbB Blumenstraße 17 80331 München (DE)**

(54) **CONDUCTIVE-MATERIAL-DISPERSED SOLUTION, ANODE SLURRY COMPOSITION, AND ANODE FOR SECONDARY BATTERY**

(57) A conductive-material-dispersed solution, according to one implementation, comprises a conductive material, a dispersant and a dispersion medium, wherein the conductive material comprises single-walled carbon nanotubes (SWCNTs) and multi-walled carbon nanotubes (MWCNTs), and the solid content of the conductive-material-dispersed solution is 1.5 wt% or greater. According to the one implementation, the provided conductive-material-dispersed solution has the conductive material predispersed therein to an excellent level such that, when added to an anode slurry composition, dispersibility and the like of the conductive material are effectively improved, and inhibits aggregation between constituent elements in the anode slurry such that high solid content characteristics and the like in a slurry can be ensured.

EP 4 607 623 A1

**Description**

Technical Field

The present disclosure relates to a conductive-material-dispersed solution, an anode slurry composition, and an anode for a secondary battery.

Background Art

When manufacturing an anode for a secondary battery, conductive materials such as carbon nanotubes (CNTs) or the like may be added to the anode slurry in powder form, and a method of applying strong kneading treatment using a Planetary Disperser (PD) mixer or the like in the addition stage may be applied to disperse the conductive material powder in the anode slurry. However, in the case of high-performance conductive materials, dispersion is practically difficult when added in powder form, and there is a problem that the slurry manufacturing (mixing) process becomes significantly long.

Accordingly, there is a demand for the development of an anode slurry composition with which an anode may be manufactured with excellent processability as an anode slurry composition including a conductive material.

Summary of Invention

Technical Problem

An aspect of the present disclosure is to provide a conductive material pre-dispersion solution having a high solids content.

Another aspect of the present disclosure is to provide a conductive-material-dispersed solution capable of improving dispersibility of a conductive material when added to an anode slurry composition.

Another aspect of the present disclosure is to provide a conductive-material-dispersed solution capable of improving a solids content of an anode slurry.

Another aspect of the present disclosure is to provide a slurry composition with an anode having excellent processability may be manufactured.

Another aspect of the present disclosure is to provide an anode for a secondary battery having improved adhesion between a current collector and a mixture layer.

Another aspect of the present disclosure is to provide an anode for a secondary battery having excellent lifespan characteristics.

Another aspect of the present disclosure is to provide an anode for a secondary battery having low resistance.

Solution to Problem

According to an aspect of the present disclosure, a conductive-material-dispersed solution includes a conductive material, a dispersant, and a dispersion medium, wherein the conductive material includes single-walled carbon nanotubes (SWCNTs) and multi-walled carbon nanotubes (MWCNTs), and a solids content of the conductive-material-dispersed solution is 1.5 wt% or more.

A maximum diameter of the conductive material may be 10 nm or more.

The conductive material may have a Raman R value of 0.01 or more according to the following Formula 1.

$$[\text{Formula 1}]$$

$$\text{Raman R} = I_D / I_G$$

In the Formula 1, the $I_D$ is a peak intensity value in an absorption region of 1350 to 1380 $\text{cm}^{-1}$, and the $I_G$ is a peak intensity value in an absorption region of 1580 to 1600 $\text{cm}^{-1}$.

Powder resistance of the conductive material may be 0.001 $\Omega\cdot\text{cm}$ or more at a rolling density of 1 g/cc.

The conductive material may be included in an amount of 0.5 wt% or more.

The dispersant may be any one selected from one or more polymer compounds selected from a substituted or unsubstituted aliphatic compound, a polysaccharide compound, and a rubber compound; a copolymer in which one or more of the polymer compounds are copolymerized; and a combination of the polymer compounds and the copolymer.

The dispersant may be included in a weight ratio of 1 to 10 times that of the conductive material.

The conductive-material-dispersed solution may have a shear viscosity of 140 Pa·s or less at a shear rate of 0.1/s.

In the conductive-material-dispersed solution, an average value of a 1 Hz phase angle before and after shearing at a shear rate of 500/s may be 11° or more.

According to an aspect of the present disclosure, an anode slurry composition includes the conductive-material-dispersed solution according to any one of the above-described embodiments.

In the anode slurry composition, a solids content may be 40 wt% or more.

According to an aspect of the present disclosure, an anode for a secondary battery is manufactured with the anode slurry composition according to any one of the above-described embodiments.

The anode for a secondary battery may include a silicon-based active material.

The silicon-based active material may be at least one selected from among Si, $SiO_x$(0<x<2), metal-doped or carbon-coated $SiO_x$(0<x<2), a Si-C composite, and a Si-Q alloy (wherein the Q is an element selected from the group consisting of alkali metals, alkaline earth metals, Group 13 elements, Group 14 elements, Group 15 elements, Group 16 elements, transition metals, rare earth elements, and combinations thereof, and is not Si).

The anode for a secondary battery may have an electrode adhesion value of 0.035 N/18mm or more.

Advantageous Effects of Invention

According to an embodiment of the present disclosure, a solution in which a conductive material is excellently predispersed may be provided.

According to another embodiment of the present disclosure, an anode slurry composition in which a conductive material is excellently dispersed may be provided.

According to another embodiment of the present disclosure, agglomeration between components in an anode slurry may be suppressed.

According to another embodiment of the present disclosure, a conductive-material-dispersed solution for manufacturing an anode slurry composition having high solids content characteristics may be provided.

According to another embodiment of the present disclosure, an anode slurry composition having a high solids content may be provided.

According to another embodiment of the present disclosure, an anode for a secondary battery may be manufactured with excellent processability.

According to another embodiment of the present disclosure, the adhesion between a current collector and a mixture layer in an anode for a secondary battery may be improved.

According to another embodiment of the present disclosure, the occurrence of a mixture layer peeling phenomenon during battery charging/discharging may be suppressed.

Best Mode for Invention

Hereinafter, various embodiments according to the present disclosure will be described, but the embodiments may be modified in various different forms, and the scope thereof is not limited to the embodiments described below. In addition, reference to "an embodiment" throughout this specification means that a specific feature, structure, or characteristic described in relation thereto is included in at least an embodiment of the present disclosure. Accordingly, the expression "an embodiment" in various places throughout this specification does not necessarily refer to the same embodiment.

According to an embodiment, a conductive material may be added to an anode slurry composition using a dispersion in which the conductive material is dispersed through a separate dispersion medium. In this way, when the conductive material is added in the form of a dispersion, the conductive material in powder form may be effectively dispersed, but if the solids content of the dispersion is low, the solids content of the anode slurry to which it is added may also be low. In this case, the viscosity, flowability, or the like of the slurry may not be controlled within an appropriate range, which may significantly reduce the productivity of the electrode process.

Meanwhile, when the slurry solids content is relatively low, the phenomenon of 'binder migration', in which electrode components such as binders or the like move together with the solvent during the drying process and distribution thereof becomes non-homogeneous, may be aggravated, and thus the adhesion and lifespan performance of the final electrode may also be significantly reduced. In particular, in the case of an anode using a silicon-based active material with a relatively large volume expansion rate during the battery charge/discharge process, as an anode active material having a high capacity, the peeling phenomenon between the current collector and the mixture layer, or the like, may be further aggravated during the cell operation process.

Accordingly, to manufacture an anode that may effectively improve the adhesion and lifespan characteristics of the final anode by increasing the solids content of the anode slurry, an increase in the solids content of the conductive-material-dispersed solution is required. According to an embodiment of the present disclosure, the solids content of the conductive-material-dispersed solution may be improved to an excellent level. Hereinafter, the embodiments of the present disclosure will be described in detail.

## Conductive-material-dispersed Solution

According to an embodiment, a conductive-material-dispersed solution includes a conductive material, a dispersant, and a dispersion medium. The conductive material includes single-walled carbon nanotubes (SWCNTs) and multi-walled carbon nanotubes (MWCNTs), and the solids content of the conductive-material-dispersed solution is 1.5 wt% or more.

Conventional commercialized single-walled carbon nanotubes (SWCNTs) are carbon nanotubes (CNTs) that have only a single-walled structure and are relatively excellent in crystallinity, conductivity, and the like, but the manufacturing process thereof is complicated, and thus they are relatively expensive, and dispersion through a dispersion medium is relatively difficult, so there is a practical limit to increasing the solids content of the dispersion. On the other hand, the conductive-material-dispersed solution according to an embodiment includes not only single-walled carbon nanotubes (SWCNTs) but also multi-walled carbon nanotubes (MWCNTs) as a conductive material, and thus may relatively improve the economy, solids content, and the like to a high level compared to a dispersion containing only single-walled carbon nanotubes (SWCNTs).

The solids content of the conductive-material-dispersed solution is 1.5 wt% or more, specifically, 1.7 wt% or more, 2.0 wt% or more, 2.3 wt% or more, 2.5 wt% or more, 2.7 wt% or more, or 3.0 wt% or more, and may be 10 wt% or less, 5 wt% or less, or 4 wt% or less. When the solids content of the conductive-material-dispersed solution is within the above-described range, the dispersibility of the conductive material may be secured at an excellent level while the solids content may be relatively greatly improved, thereby effectively improving electrode process productivity, electrode adhesion, and the like.

In an embodiment, the conductive material may have a maximum diameter of 10 nm or more. Specifically, the conductive material may have a maximum diameter of 15 nm or more, 20 nm or more, or 30 nm or more, and may be less than 50 nm or 40 nm or less. The single-walled carbon nanotubes (SWCNTs) may have a diameter of 0.5 nm to 10 nm, specifically, 1 to 5 nm, whereas the multi-walled carbon nanotubes (MWCNTs) may have a maximum diameter of 10 nm or more. The conductive-material-dispersed solution according to an embodiment may include both single-walled carbon nanotubes (SWCNTs) and multi-walled carbon nanotubes (MWCNTs) as conductive materials, such that a maximum value among values measured as the diameter of the conductive material included in the conductive-material-dispersed solution may be as described above.

According to an embodiment, the average number of walls of the conductive material may be 3 to 10, specifically, 5 to 7. The number of walls of the single-walled carbon nanotubes (SWCNT) may be 1 to 2, and the number of walls of the multi-walled carbon nanotubes (MWCNT) may be 3 or more. The conductive-material-dispersed solution according to an embodiment may include both single-walled carbon nanotubes (SWCNT) and multi-walled carbon nanotubes (MWCNT) as conductive materials, and the average number of walls of the conductive material included in the conductive-material-dispersed solution may be as described above.

The conductive material may have a Raman R value of 0.01 or more according to the following Formula 1.

$$[\text{Formula 1}]$$

$$\text{Raman R} = I_D / I_G$$

In the above formula 1, the $I_D$ is the peak intensity value of the absorption region of 1350 to 1380 cm$^{-1}$, and the $I_G$ is the peak intensity value of the absorption region of 1580 to 1600 cm$^{-1}$.

The Raman R value is a parameter indicating the relative crystallinity of a material, and the $I_D$ value indicates the peak intensity of a region related to an amorphous state, and the $I_G$ value indicates the peak intensity of a region related to a crystalline state. Therefore, the larger the Raman R value, the lower the crystallinity of the material, and the smaller the Raman R value, the higher the crystallinity of the material.

The single-walled carbon nanotubes (SWCNTs) are relatively high-density conductive materials with excellent crystallinity, conductivity, and the like, and have relatively low Raman R values, while multi-walled carbon nanotubes (MWCNTs) are low-density conductive materials with excellent dispersibility, and the like and have relatively high Raman R values. Accordingly, when conducting Raman spectroscopy analysis on a conductive material including both the single-walled carbon nanotubes (SWCNT) and multi-walled carbon nanotubes (MWCNT), the Raman R value calculated according to the above Formula 1 may be measured to be relatively large compared to a conductive material including only the single-walled carbon nanotubes (SWCNT).

Specifically, when conducting Raman spectroscopy analysis on the conductive material including both the single-walled carbon nanotubes (SWCNT) and multi-walled carbon nanotubes (MWCNT), the Raman R value calculated according to the above Formula 1 may be 0.01 or more, and more specifically, may be 0.012 or more, and may be 0.1 or less, less than 0.03, or 0.02 or less. When the Raman R value of the conductive material is within the above-described range, the conductivity, dispersibility and the like of the conductive material may be excellent at the same time.

The Raman R value of the conductive material may be a value measured for light having a wavelength of 532 nm, and specifically, may be a value calculated according to the above Formula 1 by performing Raman spectroscopy analysis with light having a wavelength of 532 nm on CNT powder mixed with SWCNT and MWCNT. At this time, the $I_D$ value and $I_G$ value of the CNT are calculated as a sum of the $I_D$ value and $I_G$ value of each of the SWCNT and MWCNT, so that the Raman R value may be measured as a single value.

According to an embodiment, the powder resistance of the conductive material may be 0.001 $\Omega$·cm or less at a rolling density of 1 g/cc. Specifically, the powder resistance of the conductive material may be greater than 0.001 $\Omega$·cm or 0.0015 $\Omega$·cm or more at a rolling density of 1 g/cc, and may be 0.04 $\Omega$·cm or less, 0.01 $\Omega$·cm or less, or 0.003 $\Omega$·cm or less. The powder resistance of the conductive material may be a value measured by a powder resistance measuring device equipped with a 4-Point Probe for CNT powder that is a mixture of SWCNT and MWCNT and is pressed at a rolling density of 1 g/cc. When the powder resistance value of the conductive material is within the above-described range, the conductivity, mechanical strength, and the like of the conductive material may be excellent within an appropriate range.

According to an embodiment, the conductive material may be included in an amount of 0.5 wt% or more in the conductive-material-dispersed solution. Specifically, the conductive material may be included in an amount of 0.6 wt% or more, 0.8 wt% or more, 1.0 wt% or more, 1.1 wt% or more, or 2.0 wt% or more, and may be included in an amount of 10 wt% or less, 5 wt% or less, or 3 wt% or less. When the content of the conductive material is within the above-described range, the dispersibility of the conductive material may be secured at an excellent level while improving the solids content, thereby improving the productivity of the electrode process, and the like.

According to an embodiment, the conductive material may include single-walled carbon nanotubes (SWCNT) and multi-walled carbon nanotubes (MWCNT) in a weight ratio of 10:90 to 90:10, and specifically, may include a weight ratio of 20:80 to 70:30. When the content ratio of the SWCNT and the MWCNT is within the above-described range, the conductivity, dispersibility, and the like of the conductive material may be secured simultaneously by including the MWCNT within a range that does not inhibit the effect of the SWCNT.

According to an embodiment, the conductive-material-dispersed solution may further include additional conductive materials in addition to single-walled carbon nanotubes (SWCNTs) and multi-walled carbon nanotubes (MWCNTs). The additional conductive materials are used to impart conductivity to the electrodes and maintain the structure of the electrodes, and the like, and may be used as conductive materials that do not cause side reactions with other elements of the secondary battery, and graphite such as natural graphite, artificial graphite or the like; a carbon-based material such as carbon black, acetylene black, Ketjen black, channel black, furnace black, lamp black, thermal black, carbon fiber, graphene, or the like; metal powder or metal fibers such as copper, nickel, aluminum, silver, or the like; conductive whiskey such as zinc oxide, potassium titanate, or the like; conductive metal oxide such as titanium oxide or the like; or a conductive polymer such as polyphenylene derivatives, or the like may be included alone or in two or more.

Meanwhile, the conductive-material-dispersed solution further includes a dispersant in addition to the conductive material, and the dispersant may be any one selected from among one or more polymer compounds selected from substituted or unsubstituted aliphatic compounds, polysaccharide compounds and rubber compounds; a copolymer in which one or more of the polymer compounds are copolymerized; and a combination of the polymer compounds and the copolymer.

Specifically, the substituted or unsubstituted aliphatic compound may be polyvinylpyrrolidone (PVP), polyvinylidene fluoride (PVDF), polyvinyl alcohol (PVA), polyacrylic acid (PAA), polytetrafluoroethylene (PTFE), polyethylene (PE), polypropylene (PP), or a combination thereof. The polysaccharide compound may be starch, carboxymethyl cellulose (CMC), hydroxypropyl cellulose (HPC), regenerated cellulose, or a combination thereof. The rubber compound may be ethylenepropylene-diene polymer (EPDM), sulfonated EPDM, nitrile rubber, styrene-butadiene rubber (SBR), fluororubber, or a combination thereof. More specifically, the dispersant may include polyvinylpyrrolidone (PVP) and carboxymethyl cellulose (CMC). The polyvinylpyrrolidone (PVP) and carboxymethylcellulose (CMC) are dispersants applicable to an aqueous conductive-material-dispersed solution containing water as a dispersion medium. When the conductive-material-dispersed solution contains the dispersant, it may be used more universally than a dispersion solution using other dispersants, and may be very useful as an aqueous conductive-material-dispersed solution with excellent economic efficiency by containing water as a dispersion medium.

According to an embodiment, the dispersant in the conductive-material-dispersed solution may be included in a weight ratio of 1 to 10 times that of the conductive material. Specifically, the dispersant may be included in a weight ratio of 1.2 times or more or 1.4 times or more that of the conductive material, and may be included in a weight ratio of 7 times or less or 3 times or less that of the conductive material. When the content ratio of the dispersant and the conductive material is adjusted within the above-described range, the conductive material may be effectively dispersed within a range that does not hinder the effect of improving conductivity, and the like through the addition of the conductive material by preventing the content of the conductive material from being excessively low.

The conductive-material-dispersed solution may have a shear viscosity of 140 Pa·s or less at a shear rate of 0.1/s. Specifically, the conductive-material-dispersed solution may have a shear viscosity of 130 Pa·s or less, 120 Pa·s or less, 110 Pa·s or less, or 73 Pa·s or less at a shear rate of 0.1/s, and may have a shear viscosity of 50 Pa·s or more, 70 Pa·s or more, 80 Pa·s or more, 100 Pa·s or more, or 120 Pa·s or more.

In addition, the conductive-material-dispersed solution may have a shear viscosity of 2.5 Pa·s or less at a shear rate of 10/s. Specifically, the conductive-material-dispersed solution may have a shear viscosity of 2.3 Pa·s or less, 2.0 Pa·s or less, 1.6 Pa·s or less, or 1.4 Pa·s or less at a shear rate of 10/s, and may have a shear viscosity of 1 Pa·s or more, 1.4 Pa·s or more, 1.6 Pa·s or more, or 2.0 Pa·s or more.

In addition, the conductive-material-dispersed solution may have a shear viscosity of 0.4 Pa·s or less at a shear rate of 100/s. Specifically, the conductive-material-dispersed solution may have a shear viscosity of 0.36 Pa·s or less, 0.3 Pa·s or less, or 0.24 Pa·s or less at a shear rate of 100/s, and may have a shear viscosity of 0.2 Pa·s or more, 0.24 Pa·s or more, 0.3 Pa·s or more, or 0.36 Pa·s or more.

In addition, the conductive-material-dispersed solution may have a shear viscosity of 0.1 Pa·s or less at a shear rate of 1000/s. Specifically, the conductive-material-dispersed solution may have a shear viscosity of 0.08 Pa·s or less, 0.06 Pa·s or less, or 0.05 Pa·s or less at a shear rate of 1000/s, and may have a shear viscosity of 0.01 Pa·s or more, 0.05 Pa·s or more, 0.06 Pa·s or more, or 0.08 Pa·s or more.

The shear viscosity value of the conductive-material-dispersed solution according to the shear rate may be a value measured at a temperature of 25 °C.

When the shear viscosity characteristics of the conductive-material-dispersed solution are as described above, the viscosity of the conductive-material-dispersed solution may be controlled to a relatively low level despite the high solids content, and the flowability, processability and the like of the conductive-material-dispersed solution may be excellent in various shear rate ranges.

The conductive-material-dispersed solution may have an average value of the 1 Hz phase angle before and after shearing of 11° or more at a shear rate of 500/s. Specifically, the conductive-material-dispersed solution may have an average value of the 1 Hz phase angle before and after shearing of 12° or more, 12.4° or more, 13° or more, or 14° or more at a shear rate of 500/s, and may be less than 45°, 20° or less, 14° or less, 13° or less, or 12.4° or less.

In addition, the conductive-material-dispersed solution may have a 1 Hz phase angle before shear of 12° or more, 12.3° or more, 12.6° or more, or 13.1° or more at a shear rate of 500/s, and may be 45° or less, 20° or less, 13.1° or less, or 12.6° or less.

In addition, the conductive-material-dispersed solution may have a 1 Hz phase angle after shear of 9° or more, 12° or more, 12.3° or more, 12.8° or more, or 13.9° or more at a shear rate of 500/s, and may be 45° or less, 20° or less, 13.9° or less, 12.8° or less, 12.3° or less.

At this time, the shear condition may be applied as a condition of applying shear for 300 seconds at a shear rate of 500/s, and the phase angle (PA) is a parameter that may evaluate the viscoelastic properties of the slurry for electrodes, and may be calculated according to the following Formula 2.

$$[\text{Formula 2}]$$

$$\delta = \tan^{-1}(G''/G')$$

In the Formula 2 above, $\delta$ is the phase angle (°), G' is the storage modulus value measured at a temperature of 25 °C, and G" is the loss modulus value measured at a temperature of 25 °C.

The storage modulus value (G'), loss modulus value (G"), phase angle, and the like may be measured and calculated by the PP (Plate & Plate) rheometer measurement method. Specifically, a certain amount of slurry is placed on the lower plate, the top spindle past is adjusted to 0.5 mm Gap, and then the rheology may be measured under constant temperature conditions of 25 °C. At this time, shear is applied for 300 seconds at a shear rate of 500/s, and an oscillation test is performed before and after the shear, and the phase angle, G* (complex modulus), and the like may be measured and confirmed as a result.

The storage modulus value (G') is a value indicating the degree of elasticity of an object. The larger the value, the relatively smaller the degree of deformation against an external force and the greater the property of storing the same (restoring force), indicating elastic properties. On the other hand, the loss modulus value (G") is a value indicating the degree of liquidity of an object. The larger the value, the greater the degree of deformation against an external force and the smaller the degree of loss (restoring force), indicating properties similar to a liquid. Therefore, the larger the G" value is relative to the G' value (for example, the relatively larger the phase angle ($\delta$) is), the more the object may exhibit characteristics closer to a liquid than a solid.

Usually, the slurry coating process is performed by coating the electrode slurry stored in a stirred storage tank on the current collector, and if the viscoelastic properties of the slurry are not controlled to an appropriate level, it is difficult to easily perform the coating process, which may significantly reduce the processability, productivity, and the like. Therefore, if the phase angle properties of the conductive-material-dispersed solution are within the above-described range, the loading uniformity may be improved in the coating process, and the degree of unevenness between the coated portion and the uncoated portion may be reduced, thereby reducing defects such as the occurrence of a coating gap, so that the processability, productivity and the like of the electrode manufacturing process using the anode slurry composition may be excellent.

According to an embodiment, the dispersion medium included in the conductive-material-dispersed solution may include water. Specifically, the conductive-material-dispersed solution may substantially not include an organic solvent by including water as the dispersion medium, and thus, side reactions or gas generation due to the organic solvent may be effectively prevented. In addition, when the conductive-material-dispersed solution is an aqueous conductive-material-dispersed solution including water as the dispersion medium, the price of the dispersion medium is low, so that economic efficiency may also be secured at an excellent level. The content of the dispersion medium is not particularly limited, and may be included as a remainder in consideration of the contents of the conductive material and dispersant described above.

**Anode Slurry Composition**

The anode slurry composition according to an embodiment includes a conductive-material-dispersed solution according to any one of the above-described embodiments. Specifically, the anode slurry composition may include a conductive-material-dispersed solution according to any one of the above-described embodiments, an anode active material, and a solvent. The anode slurry composition may include a conductive-material-dispersed solution having a relatively high solids content, so that the dispersibility of components in the slurry may be excellent, and flowability, viscosity characteristics, high solids content characteristics, and the like may be excellent. A detailed description of the conductive-material-dispersed solution overlaps with the above-described content, so description is omitted.

The anode active material may include a silicon-based active material. The silicon-based active material may increase the energy density of the anode due to relatively high capacity characteristics thereof, but may decrease the adhesion, lifespan characteristics, and the like of the anode due to its relatively large volume expansion/contraction during the battery charge/discharge process. In this regard, when the anode slurry composition includes a silicon-based active material as an anode active material and also includes the conductive-material-dispersed solution described above, it is possible to manufacture an anode having high-capacity characteristics while alleviating the decrease in anode adhesiveness and the like due to the silicon-based active material. Accordingly, the anode slurry composition may have excellent usability for a Si-based anode including a silicon-based active material.

When the anode slurry composition includes a silicon-based active material, the content thereof may be 0.1 to 50 wt%, specifically, 10 to 30 wt%, based on the total solids content of the anode slurry composition.

The type of the silicon-based active material is not particularly limited, but may be at least one selected from, for example, Si, $SiO_x(0<x<2)$, metal-doped or carbon-coated $SiO_x$ $(0<x<2)$, Si-C composite, and Si-Q alloy (wherein Q is an element selected from the group consisting of alkali metals, alkaline earth metals, Group 13 elements, Group 14 elements, Group 15 elements, Group 16 elements, transition metals, rare earth elements, and combinations thereof, and is not Si).

The anode active material may further include a carbon-based active material, and the content thereof may be 50 to 99 wt%, specifically, 70 to 90 wt%, based on the total solids content of the anode slurry composition. The type of the carbon-based active material is not particularly limited, but may be appropriately selected from among artificial graphite, natural graphite, hard carbon, soft carbon, carbon black, acetylene black, Ketjen black, Super P, graphene, fibrous carbon, and combinations thereof, for example.

In the anode slurry composition including the conductive-material-dispersed solution according to any one of the above-described embodiments, the content of the conductive material may be 0.01 to 5 wt%, specifically, 0.05 to 0.3 wt%, based on the total solids content of the anode slurry composition. In addition, the content of the dispersant in the anode slurry composition may be 0.015 to 6.5 wt%, specifically, 0.065 to 0.45 wt%.

The anode slurry composition may further include a binder. The binder is not particularly limited as long as it is a compound that serves to attach components within the anode mixture layer well to each other and to attach the anode mixture layer well to the current collector, and examples thereof may be at least one rubber-based binder selected from the group consisting of styrene-butadiene rubber (SBR), fluorine-based rubber, ethylene propylene rubber, butyl acrylate rubber, butadiene rubber, isoprene rubber, acrylonitrile rubber, acrylic rubber, and silane-based rubber; a water-soluble cellulose-based binder such as carboxymethyl cellulose (CMC), hydroxypropyl methyl cellulose, methyl cellulose, an alkali metal salt thereof, or the like; a water-soluble polymer binder such as a polyacrylic acid (PAA) binder, a polyvinyl alcohol (PVA) binder, a polyvinyl alcohol-polyacrylic acid copolymer (PVA-PAA Copolymer) binder, and the like; and a combination thereof. Specifically, the binder may include styrene-butadiene rubber (SBR), carboxymethyl cellulose (CMC), and a combination thereof.

At this time, the carboxymethyl cellulose (CMC) that may be included as the binder may be the same as or different from the carboxymethyl cellulose (CMC) that may be included as the dispersant described above. When the carboxymethyl cellulose (CMC) that may be included as the binder is different from the carboxymethyl cellulose (CMC) that may be included as the dispersant, the carboxymethyl cellulose (CMC) that may be included as the binder may have a relatively high molecular weight characteristic, and the carboxymethyl cellulose (CMC) that may be included as the dispersant may have a relatively low molecular weight characteristic of number average molecular weight ($M_n$).

Specifically, the number average molecular weight ($M_n$) of the carboxymethyl cellulose (CMC) that may be included as the dispersant may be greater than or equal to the number average molecular weight ($M_n$) of the carboxymethyl cellulose (CMC) that may be included as the binder. According to an embodiment, the number average molecular weight ($M_n$) of the carboxymethyl cellulose (CMC) that may be included as the dispersant may be 100,000 to 1,000,000 g/mol, and the number average molecular weight ($M_n$) of the carboxymethyl cellulose (CMC) that may be included as the binder may be 1,000 to 200,000 g/mol. When the number average molecular weight ($M_n$) characteristics of the carboxymethyl cellulose (CMC) that may be included as the dispersant and the binder are adjusted as described above, the effect of the addition of the dispersant and the binder may be further improved.

When the anode slurry composition further includes a binder, the content thereof may be 1 to 10 wt%, specifically, 3 to 5 wt%, based on the total solids content of the anode slurry composition.

When the anode slurry composition includes styrene-butadiene rubber (SBR) and carboxymethyl cellulose (CMC) as binders, the content of the styrene-butadiene rubber (SBR) may be 0.3 to 7 wt%, specifically, 1.5 to 3.5 wt%, based on the total solids content of the anode slurry composition, and the content of the carboxymethyl cellulose (CMC) may be 0.1 to 5 wt%, specifically, 1 to 3 wt%, based on the total solids content of the anode slurry composition. In addition, the content of styrene-butadiene rubber (SBR) compared to carboxymethyl cellulose (CMC) included in the anode slurry composition may be greater, and the weight ratio may be 1.1 to 5, specifically, 1.3 to 2.

When the binder-related characteristics of the anode slurry composition are as described above, the binder content may be adjusted within an appropriate range to improve the adhesive strength while alleviating the increase in electrical resistance.

The solids content of the anode slurry composition may be 40 wt% or more. Specifically, the solids content of the anode slurry composition may be 43 wt% or more, 45 wt% or more, 45.5 wt% or more, or 45.9 wt% or more, and may be 70 wt% or less or 50 wt% or less. When the solids content of the anode slurry composition is within the above-described range, the flowability of the slurry is relatively excellent, so that the coating/drying process and productivity may be effectively improved, and the occurrence of the binder migration phenomenon may be alleviated, so that an anode having excellent properties such as adhesive strength and the like may be manufactured.

The method for manufacturing the anode slurry composition is not particularly limited. For example, the anode slurry composition may be manufactured by mixing the conductive-material-dispersed solution, the anode active material, the binder, the organic solvent, and the like with a Thinky Mixer, a mechanical stirrer, or the like. At this time, the temperature condition of the mixing process may be, for example, 20 to 60 °C, the mixing (stirring) speed may be, for example, 100 to 2000 RPM or 500 to 1500 RPM, and the mixing time may be 10 to 30 minutes or 4 hours or less.

### Anode for Secondary Battery

An anode for a secondary battery according to an embodiment is manufactured using an anode slurry composition according to any one of the above-described embodiments. The anode for a secondary battery includes an anode current collector; and an anode mixture layer formed on at least one surface of the anode current collector. A method for manufacturing an anode for a secondary battery using the anode slurry composition is not particularly limited, and a conventional manufacturing method may be applied. For example, an anode for a secondary battery may be manufactured by applying the anode slurry composition on an anode current collector, drying and rolling it to form an anode mixture layer.

The type, thickness, and the like of the anode current collector are not particularly limited, and a material selected from the group consisting of copper foil, nickel foil, stainless steel foil, titanium foil, nickel foam, copper foam, a polymer substrate coated with a conductive metal, and a combination thereof may be appropriately used.

The anode for a secondary battery may include a silicon-based active material. The type of the silicon-based active material is not particularly limited, but may be at least one selected from among Si, $SiO_x$(0<x<2), metal-doped or carbon-coated $SiO_x$(0<x<2), Si-C composite, and Si-Q alloy (wherein Q is an element selected from the group consisting of alkali metals, alkaline earth metals, Group 13 elements, Group 14 elements, Group 15 elements, Group 16 elements, transition metals, rare earth elements, and combinations thereof, and is not Si).

The anode for a secondary battery may have an electrode bulk resistance value of 0.04 $\Omega\cdot$cm or less. Specifically, the anode for a secondary battery may have an electrode resistance value of 0.035 $\Omega\cdot$cm or less, or 0.03 $\Omega\cdot$cm or less, or 0.01 $\Omega\cdot$cm or more, or 0.02 $\Omega\cdot$cm or more. In addition, the anode for a secondary battery may have an electrode interface resistance value of 0.02 $\Omega\cdot$cm or less. Specifically, the anode for a secondary battery may have an electrode resistance value of 0.017 $\Omega\cdot$cm or less, or 0.016 $\Omega\cdot$cm or less, or 0.01 $\Omega\cdot$cm or more. The electrode resistance characteristic may be measured by contacting the 4-Point-Probe of an electrode resistance measuring device to the anode.

The anode for a secondary battery may have an electrode adhesion value of 0.035 N/18 mm or more. Specifically, the anode for a secondary battery may have an electrode adhesion value of 0.04 N/18 mm or more, 0.043 N/18 mm or more, or 0.045 N/18 mm or more, 5 N/18 mm or less, or 1 N/18 mm or less. The electrode adhesion value may be measured by performing a 90-degree peel test using a peel tester to measure the adhesion between the anode current collector and the anode mixture layer.

**Lithium Secondary Battery**

A lithium secondary battery according to an embodiment includes an anode for a secondary battery according to any one of the above-described embodiments. Specifically, the lithium secondary battery may include an anode for a secondary battery manufactured with an anode slurry composition according to any one of the above-described embodiments. For example, the lithium secondary battery may include an anode for a secondary battery according to any one of the above-described embodiments; a cathode; and an electrolyte, and may optionally further include or not include a separator as needed. A detailed description of the anode for a secondary battery overlaps with the above-described content, so description is omitted.

The type of cathode active material included in the cathode slurry composition is not particularly limited. For example, the cathode active material may include one or more of an LCO-based cathode active material represented by the chemical formula of $LiCoO_2$; an NCM-based cathode active material represented by the chemical formula of $Li_xNi_aCo_bMn_cO_y$ (0<x≤1.1, 2≤y≤2.02, 0<a<1, 0<b<1, 0<c<1, 0<a+b+c≤1); an LTO-based cathode active material represented by the chemical formula of $Li_{14}Ti_{15}O_{12}$; or a lithium iron phosphate (LFP)-based active material represented by the chemical formula of $LiFePO_4$.

The composition of the electrolyte is not particularly limited, and a typical secondary battery electrolyte may be applied. For example, the electrolyte may include one or more of an organic liquid electrolyte, an inorganic liquid electrolyte, a solid polymer electrolyte, a gel-type polymer electrolyte, a solid inorganic electrolyte, a molten inorganic electrolyte, and the like.

If the lithium secondary battery further includes a separator, the material, structure, and the like of the separator are not particularly limited, and a typical separator for a secondary battery may be applied. For example, the separator may be applied in a single-layer or multi-layer structure, such as a porous polymer film made of a polyolefin polymer such as an ethylene homopolymer, a propylene homopolymer, an ethylene/butene copolymer, an ethylene/hexene copolymer, an ethylene/methacrylate copolymer, and the like; a typical porous nonwoven fabric composed of high-melting-point glass fibers, polyethylene terephthalate fibers, and the like; and a coated separator containing a ceramic component, a polymer material, or the like.

Mode for Invention

**Example**

1. Carbon nanotubes (CNT) and Conductive-material-dispersed Solution (CNT Paste)

A carbon nanotube paste (CNT Paste) containing 30 to 70 wt% of single-walled carbon nanotubes (SWCNT) as a conductive material and the remainder of multi-walled carbon nanotubes (MWCNT), polyvinylpyrrolidone (PVP) and carboxymethyl cellulose (CMC) as dispersants, and water as a dispersion medium for the remainder was prepared, in which the conductive-material-dispersed solutions of Examples 1 to 4, in which the contents of the carbon nanotubes (CNT) and the dispersant were applied differently, were prepared. In addition, a carbon nanotube paste (CNT Paste) containing only single-walled carbon nanotubes (SWCNT) as a conductive material was prepared as the conductive-material-dispersed solution of Comparative Example 1. The CNT properties, CNT content, dispersant content, conductive-material-dispersed solution (CNT Paste) properties, and the like of manufactured Examples 1 to 4 and Comparative Example 1 are as illustrated in Table 1 below. In this case, the CNT content means the sum of the contents of single-walled carbon nanotubes (SWCNT) and multi-walled carbon nanotubes (MWCNT), and the dispersant content means the sum of the contents of polyvinylpyrrolidone (PVP) and carboxymethyl cellulose (CMC).

Meanwhile, the CNT Raman R value was calculated according to Formula 1 below by performing Raman spectroscopy on CNT powder mixed with SWCNT and MWCNT using light of a wavelength of 532 nm. At this time, the $I_D$ value and $I_G$ value of the CNT were calculated as the sum of the $I_D$ value and $I_G$ value of each of SWCNT and MWCNT, and the Raman R value was measured as a single value.

[Formula 1]

$$Raman\ R = I_D\ /\ I_G$$

In the above formula 1, the $I_D$ is the peak intensity value of the absorption region of 1350 to 1380 cm$^{-1}$, and the $I_G$ is the peak intensity value of the absorption region of 1580 to 1600 cm$^{-1}$.

In addition, the CNT powder resistance was measured by a powder resistance measuring device equipped with a 4-Point Probe for the CNT powder pressed with a rolling density of 1 g/cc as a powder mixed with SWCNT and MWCNT, and the shear viscosity of the conductive-material-dispersed solution (CNT Paste) was measured at a temperature of 25 °C according to the shear rate as illustrated in Table 1 below, and the phase angle was measured and calculated by the PP (Plate & Plate) rheometer measurement method under the condition of applying shear for 300 seconds at a shear rate of 500/s. Specifically, a certain amount of slurry was placed on the lower plate, the top spindle past was adjusted to a 0.5 mm gap, and the rheology was measured under constant temperature conditions of 25 °C. At a shear rate of 500/s, shear was applied for 300 seconds to conduct an oscillation test before and after shearing, and the phase angle was measured and confirmed as a result.

[Table 1]

| Classification | | Comparative Example 1 | Example 1 | Example 2 | Example 3 | Example 4 |
|---|---|---|---|---|---|---|
| Conductive Material Type | | SWCNT | SWCNT + MWCNT | SWCNT + MWCNT | SWCNT + MWCNT | SWCNT + MWCNT |
| Conductive Material Characteristic | Maximum Diameter (nm) | 5.6 | 34.3 | 34.3 | 34.3 | 34.3 |
| | Raman R Value(Id/Ig) | 0.007 | 0.014 | 0.014 | 0.014 | 0.014 |
| | Powder resistance ($\Omega \cdot$cm) | 0.001 | 0.002 | 0.002 | 0.002 | 0.002 |
| Dispersion Composition and Properties | CNT Content (wt%) | 0.4 | 1.2 | 0.6 | 0.8 | 1.0 |
| | Dispersant Content (wt%) | 0.6 | 1.8 | 0.9 | 1.2 | 1.5 |
| | Solids Content (wt%) | 1.0 | 3.0 | 1.5 | 2.0 | 2.5 |
| | Shear Viscosity (Pa.s) — 0.1/s | 145.0 | 126.5 | 74.6 | 72.5 | 116.0 |
| | 10/s | 2.8 | 2.3 | 1.3 | 1.5 | 1.7 |
| | 100/s | 0.432 | 0.366 | 0.242 | 0.232 | 0.353 |
| | 1000/s | 0.1004 | 0.0893 | 0.0445 | 0.0579 | 0.0669 |
| | Phase Angle (°) — Before 500/s | 11.8 | 12.5 | 15.0 | 12.2 | 13.0 |
| | After 500/s | 8.8 | 12.2 | 14.9 | 12.8 | 13.8 |
| | Average Value | 10.3 | 12.35 | 14.95 | 12.5 | 13.4 |

Referring to Table 1 above, in the case of Comparative Example 1, which only includes single-walled carbon nanotubes (SWCNTs) as the conductive material, unlike Examples 1 to 4, which include both single-walled carbon nanotubes (SWCNTs) and multi-walled carbon nanotubes (MWCNTs), the maximum diameter of the CNT was less than 10 nm, the Raman value of the CNT was less than 0.01, and the resistance value of the CNT powder was 0.001 $\Omega \cdot$cm or less.

In addition, in the case of the conductive-material-dispersed solution (CNT Paste) of Comparative Example 1 (less than 1.5 wt%), which has a relatively low solids content, the shear viscosity value was relatively high and the phase angle value was relatively low compared to the conductive-material-dispersed solutions of Examples 1 to 4.

Considering this, it is determined that the conductive-material-dispersed solution according to Comparative Example 1 will have relatively low solids content, high viscosity, low flowability, and the like compared to Examples 1 to 4, and thus the productivity, processability, or the like of the electrode process will be inferior.

## 2. Slurry Composition, Anode, and Secondary Battery

1) Anode Slurry Composition

The conductive-material-dispersed solution prepared as described above was added to a composition including a carbon-based active material (graphite-based active material), a silicon-based active material (SiC composite), a rubber-based binder (styrene-butadiene rubber; SBR), and a water-soluble binder (carboxymethyl cellulose (CMC); number average molecular weight ($M_n$): 800,000 g/mol), thereby preparing anode slurry compositions according to Examples 1 to 4 and Comparative Example 1, respectively. The composition of the prepared anode slurry composition (all contents of respective components are based on solids content) and the total solids content of the slurry are as illustrated in Table 2 below.

2) Anode for Secondary Battery and Lithium Secondary Battery

The anode slurry composition manufactured as described above was applied on an anode current collector (Cu-Foil) having a thickness of 8 $\mu$m with a loading weight (LW) of 10.6 mg/cm$^2$, dried at 120°C, and rolled to a thickness of 134 $\mu$m to manufacture an anode for a secondary battery (loading weight (LW) after rolling: 10.6 mg/cm$^2$, electrode density: 1.68 g/cc) including an anode mixture layer formed on one surface of the anode current collector.
Thereafter, a cathode slurry composition including an NCM-based active material, which is a Li-transition metal composite oxide, was applied and dried on a cathode current collector (Al-Foil) to manufacture a cathode, and a polyolefin separator was interposed between the anode and the cathode to manufacture a secondary battery cell. After that, the manufactured cell was placed in a secondary battery pouch, and an electrolyte containing 1M $LiPF_6$ dissolved in a solvent mixed with ethylene carbonate (EC) and dimethyl carbonate (DMC) was injected and sealed to manufacture a pouch-type lithium secondary battery. The manufactured pouch-type lithium secondary battery was applied as a secondary battery sample of the examples and comparative examples.

3) Characteristic Evaluation

(1) Electrode Resistance Characteristics

The manufactured anode was contacted with a 4-Point-Probe of an electrode resistance measuring device (HIOKI Corporation) to measure the bulk resistance value and interface resistance value of the anode, respectively, and the results are illustrated in Table 2 below.

(2) Electrode Adhesion

The manufactured anode was subjected to a 90-degree peel test using a peel tester to measure the adhesion between the anode current collector and the anode mixture layer, and the results are illustrated in Table 2 below. Specifically, after cutting the anode to a size of 18 mm in width and 150 mm in length, a tape with a width of 18 mm was attached to the anode current collector, and a roller with a load of 2 kg was used to ensure sufficient adhesion. After that, the anode mixture layer was attached to one side of a tensile tester (IMADA, DS2-50N) using double-sided tape, and the tape attached to the anode current collector was fastened to the other side of the tensile tester to measure the adhesive strength.

(3) Capacity Retention Rate

The manufactured secondary battery sample was charged at 0.3 C to a voltage corresponding to 98% of SOC under constant current/constant voltage (CC/CV) conditions, then cut off at 0.05 C, and then discharged at 0.3 C to a voltage corresponding to 4% of SOC under constant current (CC) conditions 200 times, and the discharge capacity retention rate compared to the initial discharge capacity was calculated as a %, and the results are illustrated in Table 2 below.

[Table 2]

| Classification | | Comparative Example 1 | Example 1 | Example 2 | Example 3 | Example 4 |
|---|---|---|---|---|---|---|
| Slurry Composition | Carbon-based Active Material Content (wt%) | 85.65 | 85.65 | 85.65 | 85.65 | 85.65 |
| | Silicon-based Active Material Content (wt%) | 11 | 11 | 11 | 11 | 11 |
| | Conductive Material Content (wt%) | 0.1 | 0.1 | 0.1 | 0.1 | 0.1 |
| | Dispersant Content (wt%) | 0.15 | 0.15 | 0.15 | 0.15 | 0.15 |
| | Water-soluble Binder Content(wt%) | 1.3 | 1.3 | 1.3 | 1.3 | 1.3 |
| | Rubber-based binder (wt%) | 1.8 | 1.8 | 1.8 | 1.8 | 1.8 |
| | Sum (wt%) | 100 | 100 | 100 | 100 | 100 |
| | Slurry Solids Content (wt%) | 42.65 | 45.91 | 44.22 | 45.05 | 45.56 |
| Characteristic Evaluation | Electrode Bulk Resistance ($\Omega \cdot cm$) | 0.031 | 0.03 | 0.032 | 0.029 | 0.036 |
| | Electrode Interfacial Resistance ($\Omega \cdot cm^2$) | 0.016 | 0.017 | 0.015 | 0.019 | 0.018 |
| | Electrode Adhesion (N/18mm) | 0.031 | 0.048 | 0.036 | 0.041 | 0.044 |
| | Capacity Retention (%) | 97.7 | 97.9 | 97.4 | 98 | 98.2 |

Referring to Table 2 above, in the case of the anode slurry composition of Comparative Example 1 including a conductive-material-dispersed solution having a relatively low solids content, the slurry solids content was also found to be relatively low compared to Examples 1 to 4 under the same conditions, and the adhesive strength or the like of the anode finally manufactured was found to be inferior.

On the other hand, in the case of the slurry compositions of Examples 1 to 4 including a conductive-material-dispersed solution having a relatively high solids content and a relatively high slurry solids content, the adhesive strength of the anode finally manufactured was found to be relatively excellent, and the resistance characteristics and lifespan characteristics were also found to be excellent.

Therefore, as in Examples 1 to 4, when an anode slurry composition is manufactured using a conductive-material-dispersed solution containing both single-walled carbon nanotubes (SWCNTs) and multi-walled carbon nanotubes (MWCNTs) as conductive materials and having a relatively high solids content, it is determined that the slurry solids content may be relatively increased to increase the electrode process productivity, and the occurrence of binder migration may be alleviated to effectively improve the characteristics such as electrode adhesion and the like.

Industrial Applicability

As described above, the features of the present invention may be applied to a conductive-material-dispersed solution, an anode slurry composition, and an anode for a secondary battery in whole or in part.

**Claims**

1.    A conductive-material-dispersed solution comprising:

    a conductive material, a dispersant, and a dispersion medium,
    wherein the conductive material includes single-walled carbon nanotubes (SWCNTs) and multi-walled carbon nanotubes (MWCNTs), and

a solids content of the conductive-material-dispersed solution is 1.5 wt% or more.

2. The conductive-material-dispersed solution of claim 1, wherein a maximum diameter of the conductive material is 10 nm or more.

3. The conductive-material-dispersed solution of claim 1, wherein the conductive material has a Raman R value of 0.01 or more according to the following Formula 1,

$$[\text{Formula 1}]$$

$$\text{Raman R} = I_D / I_G,$$

where the $I_D$ is a peak intensity value in an absorption region of 1350 to 1380 $\text{cm}^{-1}$, and the $I_G$ is a peak intensity value in an absorption region of 1580 to 1600 $\text{cm}^{-1}$.

4. The conductive-material-dispersed solution of claim 1, wherein powder resistance of the conductive material is 0.001 $\Omega \cdot \text{cm}$ or more at a rolling density of 1 g/cc.

5. The conductive-material-dispersed solution of claim 1, wherein the conductive material is included in an amount of 0.5 wt% or more.

6. The conductive-material-dispersed solution of claim 1, wherein the dispersant is any one selected from one or more polymer compounds selected from a substituted or unsubstituted aliphatic compound, a polysaccharide compound, and a rubber compound; a copolymer in which one or more of the polymer compounds are copolymerized; and a combination of the polymer compounds and the copolymer.

7. The conductive-material-dispersed solution of claim 1, wherein the dispersant is included in a weight ratio of 1 to 10 times that of the conductive material.

8. The conductive-material-dispersed solution of claim 1, wherein the conductive-material-dispersed solution has a shear viscosity of 140 Pa·s or less at a shear rate of 0.1/s.

9. The conductive-material-dispersed solution of claim 1, wherein in the conductive-material-dispersed solution, an average value of a 1 Hz phase angle before and after shearing at a shear rate of 500/s is 11° or more.

10. An anode slurry composition comprising the conductive-material-dispersed solution according to any one of claims 1 to 9.

11. The anode slurry composition of claim 10, wherein a solids content is 40 wt% or more.

12. An anode for a secondary battery is **characterized in that** the anode is manufactured with the anode slurry composition according to claim 10.

13. The anode for a secondary battery of claim 12, wherein the anode for a secondary battery includes a silicon-based active material.

14. The anode for a secondary battery of claim 13, wherein the silicon-based active material is at least one selected from among Si, $SiO_x$(0<x<2), metal-doped or carbon-coated $SiO_x$(0<x<2), a SiC composite, and a Si-Q alloy (wherein the Q is an element selected from the group consisting of alkali metals, alkaline earth metals, Group 13 elements, Group 14 elements, Group 15 elements, Group 16 elements, transition metals, rare earth elements, and combinations thereof, and is not Si).

15. The anode for a secondary battery of claim 12, wherein an electrode adhesion value is 0.035 N/18mm or more.

## INTERNATIONAL SEARCH REPORT

| International application No. |
| --- |
| **PCT/KR2024/001946** |

**A.    CLASSIFICATION OF SUBJECT MATTER**

**H01M 4/62**(2006.01)i; **H01M 4/38**(2006.01)i; **H01M 4/48**(2010.01)i; **H01M 4/587**(2010.01)i; **H01M 4/134**(2010.01)i; **H01M 4/36**(2006.01)i; **H01M 4/583**(2010.01)i; **H01M 4/02**(2006.01)i

According to International Patent Classification (IPC) or to both national classification and IPC

**B.    FIELDS SEARCHED**

Minimum documentation searched (classification system followed by classification symbols)

H01M 4/62(2006.01); H01M 10/052(2010.01); H01M 10/0525(2010.01); H01M 2/10(2006.01); H01M 4/13(2010.01); H01M 4/48(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 도전재(conductive material), 분산제(dispersant), 단일벽 탄소나노튜브(single-wall carbon nanotube), 다중벽 탄소나노튜브(multi-wall carbon nanotube), 고형분 함량(solid content)

**C.    DOCUMENTS CONSIDERED TO BE RELEVANT**

| Category* | Citation of document, with indication, where appropriate, of the relevant passages | Relevant to claim No. |
| --- | --- | --- |
| X | KR 10-2017-0069141 A (LG CHEM, LTD.) 20 June 2017 (2017-06-20)<br>See claims 1, 3-4, 9, 16 and 19-20; and paragraphs [0047], [0049], [0051], [0070], [0186], [0188], [0213] and [0215]. | 1-3,5-15 |
| Y | | 4 |
| Y | WO 2017-074124 A1 (LG CHEM, LTD.) 04 May 2017 (2017-05-04)<br>See claims 1-2; paragraphs [0057] and [0246]; and table 2. | 4 |
| A | CN 112349900 A (ZHUHAI COSMX BATTERY CO., LTD.) 09 February 2021 (2021-02-09)<br>See entire document. | 1-15 |
| A | KR 10-2017-0113250 A (LG CHEM, LTD.) 12 October 2017 (2017-10-12)<br>See entire document. | 1-15 |

☑ Further documents are listed in the continuation of Box C.          ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **28 May 2024** | **28 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/001946** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2021-176140 A (TOYO INK SC HOLDINGS CO., LTD.) 04 November 2021 (2021-11-04)<br>See entire document. | 1-15 |

Form PCT/ISA/210 (second sheet) (July 2022)

## INTERNATIONAL SEARCH REPORT
### Information on patent family members

International application No.

**PCT/KR2024/001946**

| Patent document cited in search report | | | Publication date (day/month/year) | Patent family member(s) | | | Publication date (day/month/year) |
|---|---|---|---|---|---|---|---|
| KR | 10-2017-0069141 | A | 20 June 2017 | CN | 107851800 | A | 27 March 2018 |
| | | | | CN | 107851800 | B | 09 February 2021 |
| | | | | EP | 3355393 | A1 | 01 August 2018 |
| | | | | EP | 3355393 | B1 | 27 May 2020 |
| | | | | JP | 2018-534731 | A | 22 November 2018 |
| | | | | JP | 6732295 | B2 | 29 July 2020 |
| | | | | KR | 10-2077757 | B1 | 17 February 2020 |
| | | | | US | 10727477 | B2 | 28 July 2020 |
| | | | | US | 2018-0175370 | A1 | 21 June 2018 |
| WO | 2017-074124 | A1 | 04 May 2017 | None | | | |
| CN | 112349900 | A | 09 February 2021 | None | | | |
| KR | 10-2017-0113250 | A | 12 October 2017 | CN | 108140841 | A | 08 June 2018 |
| | | | | CN | 108140841 | B | 15 October 2021 |
| | | | | EP | 3333946 | A1 | 13 June 2018 |
| | | | | EP | 3333946 | B1 | 17 March 2021 |
| | | | | JP | 2018-533175 | A | 08 November 2018 |
| | | | | JP | 6719759 | B2 | 08 July 2020 |
| | | | | KR | 10-2320010 | B1 | 02 November 2021 |
| | | | | US | 11108050 | B2 | 31 August 2021 |
| | | | | US | 2019-0044150 | A1 | 07 February 2019 |
| JP | 2021-176140 | A | 04 November 2021 | CN | 115461898 | A | 09 December 2022 |
| | | | | EP | 4145553 | A1 | 08 March 2023 |
| | | | | JP | 2021-175699 | A | 04 November 2021 |
| | | | | JP | 2023-024526 | A | 16 February 2023 |
| | | | | JP | 6860740 | B1 | 21 April 2021 |
| | | | | JP | 7204076 | B2 | 16 January 2023 |
| | | | | KR | 10-2023-0007337 | A | 12 January 2023 |
| | | | | US | 2023-0187644 | A1 | 15 June 2023 |
| | | | | WO | 2021-220773 | A1 | 04 November 2021 |

Form PCT/ISA/210 (patent family annex) (July 2022)